# EUROPEAN PATENT APPLICATION

(11) **EP 4 407 903 A1**
(43) Date of publication of application: **31.07.2024**
(21) Application number: 21957890.3
(22) Date of filing: 24.09.2021
(51) Int. Cl.: H04L 1/00

(54) **INFORMATION REPORTING METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Zimmermann, Tankred Klaus
(86) International application number: PCT/CN2021/120345
(87) International publication number: WO 2023/044761

(57) **Abstract**

An information reporting method and apparatus, a device, and a storage medium, relating to the field of mobile communications. The method comprises: sending first channel state information to a network device; and sending second channel state information to the network device, the second channel state information comprising a difference value from the first channel state information. The channel state corresponding to the second channel state information can also be determined by means of the difference value. While ensuring the normal transmission of channel state information, the resource amount of the second channel state information is reduced by means of the difference value, thereby reducing the signaling overhead of transmitting the second channel state information.

## Description

### TECHNICAL FIELD

The disclosure relates to the field of mobile communication, and more particularly to a method and an apparatus for reporting information, a device, and a storage medium.

### BACKGROUND

With the rapid development of mobile communication technologies, a network device needs to adjust a modulation mode of signals based on channel state information reported by a terminal when communicating with the terminal, such that the signals are modulated based on the adjusted modulation mode and communication is performed.

In the related art, after the terminal obtains the channel state information between the terminal and the network device through measurement, the terminal sends the obtained channel state information to the network device periodically. However, if a mobile velocity of the terminal is too fast, it is required to improve a frequency of sending the channel state information to solve a problem of poor timeliness of the channel state information. However, improving the frequency of sending the channel state information may cause a large signaling overhead. Therefore, a method for sending the channel state information is urgently needed.

### SUMMARY

Embodiments of the disclosure provide a method and an apparatus for reporting information, a device and a storage medium, which may reduce an amount of resources occupied by second channel state information is reduced by means of a difference under a condition of ensuring a normal transmission of channel state information, thereby reducing a signaling overhead of transmitting the second channel state information. The technical solution will be described as follows.

According to an aspect of the disclosure, there is provided a method for reporting information, performed by a terminal. The method includes:
sending first channel state information to a network device; and
sending second channel state information to the network device, the second channel state information including a difference with respect to the first channel state information.

According to an aspect of the disclosure, there is provided a method for reporting information, performed by a network device. The method includes:
receiving first channel state information sent by a terminal; and
receiving second channel state information sent by the terminal, the second channel state information including a difference with respect to the first channel state information.

According to an aspect of the disclosure, there is provided an apparatus for reporting information. The apparatus includes:
a sending module, configured to send first channel state information to a network device.

The sending module is configured to send second channel state information to the network device, and the second channel state information includes a difference with respect to the first channel state information.

According to an aspect of the disclosure, there is provided an apparatus for reporting information. The apparatus includes:
a receiving module, configured to receive first channel state information sent by a terminal.

The receiving module is configured to receive second channel state information sent by the terminal, and the second channel state information includes a difference with respect to the first channel state information.

According to an aspect of the disclosure, there is provided a terminal. The terminal includes: a processor; a transceiver, connected with the processor; and a memory, configured to store executable instructions of the processor. The processor is configured to load and execute the executable instructions to implement the method for reporting information described in the above aspects.

According to an aspect of the disclosure, there is provided a network device. The network device includes: a processor; a transceiver, connected with the processor; and a memory, configured to store executable instructions of the processor. The processor is configured to load and execute the executable instructions to implement the method for reporting information described in the above aspects.

According to an aspect of the disclosure, there is provided a computer readable storage medium having executable program codes stored thereon. The executable program codes are loaded and executed by a processor to cause the processor to implement the method for reporting information described in the above aspects.

According to an aspect of the disclosure, there is provided a chip. The chip includes a programmable logic circuit and/or program instructions. The chip is configured to implement the method for reporting information described in the above aspects when the chip runs on a terminal or a network device.

According to an aspect of the disclosure, embodiments of the disclosure provide a computer program product. The computer program product is configured to implement the method for reporting information described in the above aspects when the computer program product is executed by a processor of the terminal or the network device.

The technical solution provided by embodiments of the disclosure at least includes following beneficial effects.

With the method, the apparatus, the device and the storage medium according to the embodiments of the disclosure, the terminal sends the first channel state information and the second channel state information to the network device, the second channel state information merely includes the difference with respect to the first channel state information, and a channel state corresponding to the second channel state information may also be determined by means of the difference. In this way, under the condition of ensuring normal transmission of the channel state information, an amount of resources occupied by the second channel state information is reduced by means of the difference, thereby reducing a signaling overhead of transmitting the second channel state information.

### BRIEF DESCRIPTION OF THE DRAWINGS

In order to more clearly illustrate technical solutions in embodiments of the disclosure, accompanying drawings needed to use in the embodiment description will be introduced clearly below. Apparently, the accompanying drawings described below are only a part of embodiments of the disclosure. For the ordinary skilled in the art, other accompanying drawings may further be obtained based on these accompanying drawings without creative work.
FIG. 1 is a schematic diagram illustrating a communication system according to an embodiment of the disclosure.
FIG. 2 is a flow chart illustrating a method for reporting information according to an embodiment of the disclosure.
FIG. 3 is a flow chart illustrating a method for reporting information according to an embodiment of the disclosure.
FIG. 4 is a flow chart illustrating a method for reporting information according to an embodiment of the disclosure.
FIG. 5 is a flow chart illustrating a method for reporting information according to an embodiment of the disclosure.
FIG. 6 is a flow chart illustrating a method for reporting information according to an embodiment of the disclosure.
FIG. 7 is a flow chart illustrating a method for reporting information according to an embodiment of the disclosure.
FIG. 8 is a flow chart illustrating a method for reporting information according to an embodiment of the disclosure.
FIG. 9 is a flow chart illustrating a method for reporting information according to an embodiment of the disclosure.
FIG. 10 is a flow chart illustrating a method for reporting information according to an embodiment of the disclosure.
FIG. 11 is a flow chart illustrating a method for reporting information according to an embodiment of the disclosure.
FIG. 12 is a flow chart illustrating a method for reporting information according to an embodiment of the disclosure.
FIG. 13 is a flow chart illustrating a method for reporting information according to an embodiment of the disclosure.
FIG. 14 is a flow chart illustrating a method for reporting information according to an embodiment of the disclosure.
FIG. 15 is a block diagram illustrating a communication apparatus according to an embodiment of the disclosure.
FIG. 16 is a block diagram illustrating a communication apparatus according to an embodiment of the disclosure.
FIG. 17 is a block diagram illustrating a communication apparatus according to an embodiment of the disclosure.
FIG. 18 is a block diagram illustrating a communication apparatus according to an embodiment of the disclosure.
FIG. 19 is a block diagram illustrating a communication device according to an embodiment of the disclosure.

### DETAILED DESCRIPTION

In order to enable the purpose, the technical solution and advantages of the disclosure more clear, detailed description will be further made below to implementations of the disclosure with reference to the accompanying drawings.

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all implementations consistent with the disclosure. Instead, they are merely examples of apparatuses and methods consistent with some aspects of the disclosure as detailed in the appended claims.

The term employed in the disclosure is merely for the purpose of describing a detailed embodiment, and is not intended to limit the disclosure. As used in the disclosure and the appended claims, a singular form "a" or "the" is also intended to include plural forms, unless the context clearly indicates other meaning. It should also be understood that, the term "and/or" as used herein refers to including any or all possible combinations of one or more associated listed items.

It should be understood that, although terms "first, second, third and the like" may be employed in the disclosure to describe various kinds of information, the information should not be limited to these terms. These terms are merely used to distinguish a same type of information from each other. For example, without departing from a scope of the disclosure, first information may also be called second information, and similarly, the second information may also be called first information. Depending on the context, the word "if' as used herein may be interpreted as "when" or "in a case that..." or "in response to a determination".

Description will be made below to an application scene of the disclosure.

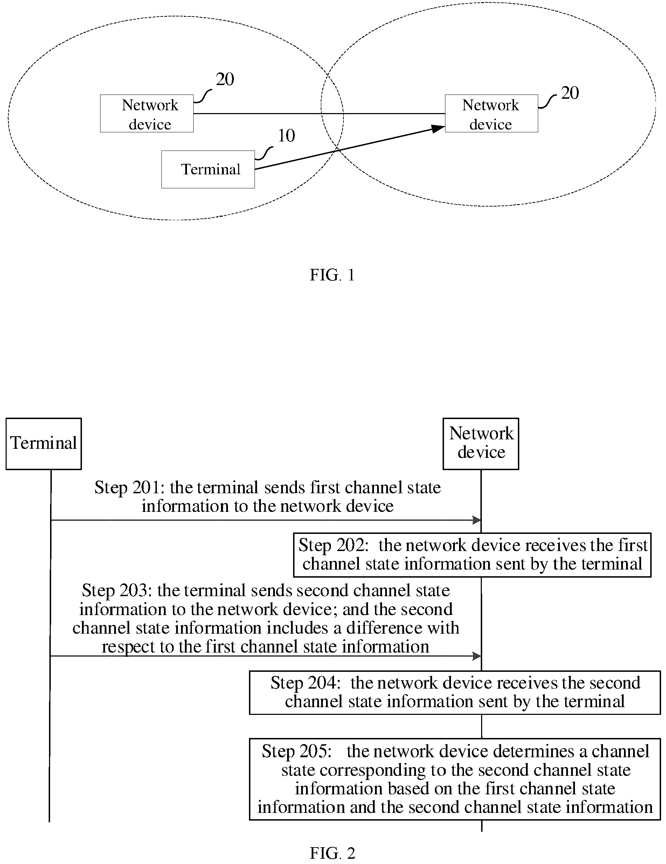

FIG. 1 is a schematic diagram illustrating a communication system according to an embodiment of the disclosure. The communication system may include: a terminal 10 and a network device 20.

There are usually multiple terminals 10, and one or more terminals 10 may be distributed in a cell managed by a network device 20. The terminal 10 may include various handheld devices, vehicle-mounted devices, wearable devices and computing devices with the wireless communication function or other processing devices connected to wireless modems, as well as various forms of user equipments (UEs), mobile stations (MSs) and the like. For convenience of description, the above-mentioned devices are collectively referred to as terminals in the embodiments of the disclosure.

The network device 20 is a device deployed in an access network to provide the wireless communication function for the terminal 10. The network device 20 may include various forms of macro base stations, micro base stations, relay stations, access points, and the like. Names of a device with a function of the network device may be different in systems with different wireless access technologies, for example, the device is called gNodeB or gNB in a 5G NR system. With the evolution of communication technologies, the name "network device" may change. For convenience of description, the above-mentioned devices providing the wireless communication function for the terminals 10 are collectively referred to as network devices in the embodiments of the disclosure. A connection may be established between the network device 20 and the terminal 10 through an air interface, so that communication is performed via the connection, including exchanging signaling and data. There may be multiple network devices 20, and two adjacent network devices 20 may perform communication in a wired or wireless way. The terminal 10 may switch between different network devices 20, that is, establish connections with different network devices 20.

The "5G NR system" in the embodiments of the disclosure may also be called a 5G system or an NR system, but those skilled in the art may understand the meaning thereof. The technical solution described in the embodiments of the disclosure may be applied to the 5G NR system, and may also be applied to a subsequent evolution system of the 5G NR system.

FIG. 2 is a flow chart illustrating a method for reporting information according to an embodiment of the disclosure, applied to the terminal and the network device as illustrated in FIG. 1. The method includes at least part of the following contents.

At block 201, the terminal sends first channel state information to the network device.

At block 202, the network device receives the first channel state information sent by the terminal.

In the embodiments of the disclosure, the terminal sends the first channel state information to the network device. The first channel state information indicates a channel state of a current position where the terminal is located. The terminal continues to send second channel state information to the network device subsequently. Since the second channel state information includes a difference with respect to the first channel state information, a channel state corresponding to the second channel state information is determined based on the difference and the first channel state information.

The first channel state information is obtained by measuring a current channel state by the terminal. The second channel state information is obtained by measuring the current channel state and determining the difference with respect to the first channel state information by the terminal.

At block 203, the terminal sends the second channel state information to the network device. The second channel state information includes a difference with respect to the first channel state information.

The difference may be an absolute value of a measurement value of a certain parameter measured at a measurement time corresponding to the second channel state information, and the measurement value is different from a measurement value measured at a measurement time corresponding to the first channel state information. Alternatively, the difference may be a relative value of the measurement value of the certain parameter measured at the measurement time corresponding to the second channel state information relative to the measurement value of the same parameter measured at the measurement time corresponding to the first channel state information, and the relative value is not 0.

The parameter in this embodiment of the disclosure is the same as at least one of parameters included in the first channel state information or the second channel state information in the following embodiments. Reference can be made to the following embodiments for details.

At block 204, the network device receives the second channel state information sent by the terminal.

In this embodiment of the disclosure, after receiving the first channel state information and the second channel state information sent by the terminal, the network device may determine the channel state corresponding to the second channel state information based on the difference included in the second channel state information and the first channel state information.

In some embodiments, the second channel state information is carried on a physical uplink control channel (PUCCH) or on a physical uplink shared channel (PUSCH).

At block 205, the network device determines the channel state corresponding to the second channel state information based on the first channel state information and the second channel state information.

In some embodiments, the network device obtains a sum of the first channel state information and the difference included in the second channel state information as the channel state corresponding to the second channel state information.

It should be noted that, this embodiment of the disclosure is described by taking performing the step at block 205 as an example. In another embodiment, the network device may also determine the channel state information in other ways without executing the step at block 205, which is not limited in the embodiments of the disclosure.

With the method according to this embodiment of the disclosure, the terminal sends the first channel state information and the second channel state information to the network device, the second channel state information merely includes the difference with respect to the first channel state information, and the channel state corresponding to the second channel state information may also be determined by means of the difference. In this way, an amount of resources occupied by the second channel state information is reduced by means of the difference under a condition of ensuring a normal transmission of channel state information, and a signaling overhead for transmitting the second channel state information is further reduced.

On the basis of the embodiment illustrated in FIG. 2, the first channel state information and the second channel state information are reported at different reporting time.

In some embodiments, the first channel state information is reported at a first reporting time, and the second channel state information is reported at a second reporting time.

In a possible implementation, a preset interval exists between the first reporting time and the second reporting time.

For example, the preset interval is set by the terminal, by the network device, or in other ways, which is not limited in the embodiments of the disclosure.

With the method according to this embodiment of the disclosure, the terminal reports the first channel state information and the second channel state information at different reporting time, such that the first channel state information and the second channel state information respectively indicate the channel states at different time, thereby improving a timeliness of the terminal for reporting the channel state information and improving an efficiency of reporting the channel state information.

On the basis of the embodiment illustrated in FIG. 2, the first channel state information includes at least one parameter to indicate the channel state. In some embodiments, the first channel state information includes at least one of the following.
(1) A channel state information reference signal (CSI-RS) resource indicator (CRI).
(2) A rank indicator (RI).
(3) A precoding matrix indicator (PMI).

In some embodiments, the PMI includes at least one of the following.

1. X1 information field: a wideband PMI.

In some embodiments, the wideband PMI includes a codebook index i₁.

In a possible implementation, i₁ includes at least one of following parameters.

A first parameter is related to the number of antenna ports in a first dimension and the number of oversampling in the first dimension. A second parameter is related to the number of antenna ports in a second dimension and the number of oversampling in the second dimension. A third parameter is related to the number of oversampling in the first dimension and the number of oversampling in the second dimension. A fourth parameter is related to the number of antenna ports in the first dimension and the number of antenna ports in the second dimension. A fifth parameter is related to the number of antenna ports in the first dimension, the number of antenna ports in the second dimension and the number of beams. A sixth parameter is related to different layers. A seventh parameter is related to different antenna panels. An eighth parameter indicates different wideband amplitudes.

2. X2 information field: a wideband PMI or per subband PMI.

In some embodiments, the wideband PMI or per subband PMI includes a codebook index i₂.

In a possible implementation, i₂ includes at least one of following parameters.

A ninth parameter is configured to indicate a phase offset. A tenth parameter is configured to indicate an amplitude of a narrow band. An eleventh parameter is configured to indicate a frequency domain unit, and is related to the total number of frequency domain units and the number of indicated frequency domain units.
(4) A channel quality indicator (CQI).
(5) A layer indicator (LI).
(6) A synchronization signal (SS)/physical broadcast signal (PBCH) block resource indicator (SSBRI).
(7) A layer-1 reference signal received power (L1-RSRP).
(8) A layer-1 signal to interference plus noise ratio (L1-SINR).
(9) A Doppler migration.
(10) A Doppler spread.
(11) An average delay.
(12) A delay spread.

On the basis of the embodiment illustrated in FIG. 2, the second channel state information includes at least one parameter to indicate the channel state. In some embodiments, the second channel state information includes at least one of the following.
(1) A CRI.
(2) An RI.
(3) A PMI.

In some embodiments, the PMI includes at least one of the following.
1. X1 information field: a wideband PMI.

In some embodiments, the wideband PMI includes a codebook index ii.

In a possible implementation, i₁ includes at least one of following parameters.

A first parameter is related to the number of antenna ports in a first dimension and the number of oversampling in the first dimension. A second parameter is related to the number of antenna ports in a second dimension and the number of oversampling in the second dimension. A third parameter is related to the number of oversampling in the first dimension and the number of oversampling in the second dimension. A fourth parameter is related to the number of antenna ports in the first dimension and the number of antenna ports in the second dimension. A fifth parameter is related to the number of antenna ports in the first dimension, the number of antenna ports in the second dimension and the number of beams. A sixth parameter is related to different layers. A seventh parameter is related to different antenna panels. An eighth parameter indicates different wideband amplitudes.

2. X2 information field: a wideband PMI or per subband PMI.

In some embodiments, the wideband PMI or per subband PMI includes a codebook index i₂.

In a possible implementation, i₂ includes at least one of following parameters.

A ninth parameter is configured to indicate a phase offset. A tenth parameter is configured to indicate an amplitude of a narrow band. An eleventh parameter is configured to indicate a frequency domain unit, and is related to the total number of frequency domain units and the number of indicated frequency domain units.
(4) A CQI.
(5) An LI.
(6) An SSBRI.
(7) An L1-RSRP.
(8) An L1-SINR.
(9) A Doppler migration.
(10) A Doppler spread.
(11) An average delay.
(12) A delay spread.

The second channel state information is similar to the first channel state information in the above embodiment, which is not elaborated here.

In some embodiments, in case that the first channel state information includes at least one of the PMI (or any parameter in the PMI), the RI, the CQI and the LI, while the second channel state information does not include measurement values of these parameters, for example, the second channel state information includes at least one of the Doppler migration, the Doppler spread, the average delay and the delay spread, in this case, the first channel state information and the second channel state information include different contents, it means that at least one of the PMI (or any parameter in the PMI), the RI, the CQI and the LI measured at the measurement time of the second channel state information is the same as the measurement value of the parameter obtained at the measurement time of the first channel state information.

It should be noted that, in embodiments of the disclosure, the second channel state information includes the content similar to that included in the first channel state information, and the only difference is that the first channel state information includes each of the above parameters while the second channel state information includes a difference corresponding to each of the above parameters. The difference may be the absolute value of the measurement value of the certain parameter measured at the measurement time corresponding to the second channel state information, and the measurement value is different from the measurement value measured at the measurement time corresponding to the first channel state information. Alternatively, the difference may be the relative value of the measurement value of the certain parameter measured at the measurement time corresponding to the second channel state information relative to the measurement value of the same parameter measured at the measurement time corresponding to the first channel state information, and the relative value is not 0.

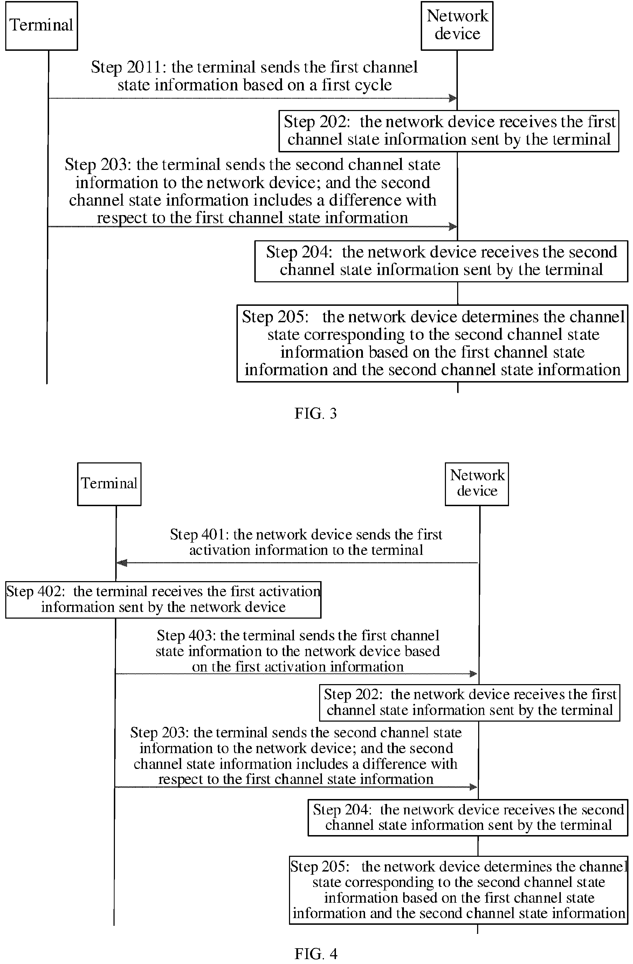

On the basis of the embodiment illustrated in FIG. 2, the terminal sends the first channel state information to the network device periodically. Steps illustrated in FIG. 3 are included.

At block 2011: the terminal sends the first channel state information based on a first cycle.

In this embodiment of the disclosure, the terminal sends the first channel state information to the network device periodically, and a cycle for the terminal to send the first channel state information is the first cycle.

The first cycle is pre-configured by the network device, or set by the terminal, or agreed by the protocol.

In some embodiments, the first cycle is represented by a symbol, the first cycle is represented by a time slot, or the first cycle is represented in other ways, which is not limited in embodiments of the disclosure.

For example, the first cycle is 6 symbols, or the first cycle is 2 time slots, 3 time slots or other numerical values.

In case that the first cycle is 3 time slots, the terminal sends a piece of first channel state information in a first time slot, sends a piece of first channel state information in a fourth time slot and sends a piece of first channel state information in a seventh time slot, and so on, and then continues to send the first channel state information based on the first cycle which is the 3 time slots.

In some embodiments, the first cycle may also be an interval between two adjacent pieces of first channel state information. The intervals between any two adjacent pieces of first channel state information are the same, that is, the first channel state information is sent periodically.

For example, the interval may be represented by the symbol, represented by a time slot, or represented in other ways.

It should be noted that, in embodiments of the disclosure, in case that an interval is employed to indicate that the first channel state information is sent based on the first cycle, the first cycle differs from the interval by one unit. For example, in case that both the first cycle and the interval are represented by the time slot, and the first cycle is 4 time slots, then the interval is 3 time slots. Alternatively, in case that both the first cycle and the interval are represented by the symbol, and the first cycle is 6 symbols, then the interval is 5 symbols.

With the method according to this embodiment of the disclosure, the terminal sends the first channel state information based on the first cycle, to ensure that the network device determines the channel state according to the first channel state information received periodically, thereby ensuring the communication with the terminal and improving a communication quality between the network device and the terminal.

On the basis of the embodiment illustrated in FIG. 2, the terminal may be instructed, by first activation information sent from the network device, to send the first channel state information. Steps illustrated in FIG 4 are included.

At block 401, the network device sends the first activation information to the terminal.

At block 402, the terminal receives the first activation information sent by the network device.

In this embodiment of the disclosure, the network device activates the terminal to send the first channel state information by sending the first activation information to the terminal.

In some embodiments, the first activation information is media access control control element (MAC CE) information, or other types of information, which is not limited in the embodiments of the disclosure.

At block 403, the terminal sends the first channel state information to the network device based on the first activation information.

The terminal receives the first activation information, and the first activation information instructs sending of the first channel state information. Then the terminal sends the first channel state information to the network device.

In some embodiments, the first activation information includes a second cycle. The terminal obtains the second cycle included in the first activation information after receiving the first activation information, and determines that the first channel state information needs to be sent to the network device based on the second cycle. The terminal sends the first channel state information to the network device based on the second cycle according to the first activation information.

The second cycle may be represented by a symbol, represented by a time slot, or represented in other ways, which is not limited in the embodiments of the disclosure. For example, the second cycle is 6 symbols, 7 symbols, 2 time slots, 3 time slots or other numerical values, which is not limited in the embodiments of the disclosure.

In a possible implementation, the first activation information includes a first index identifier, and the second cycle corresponding to the first index identifier is determined based on the first index identifier included in the first activation information, and the first channel state information is sent to the network device based on the second cycle.

In embodiments of the disclosure, the network device indicates the second cycle through the first index identifier included in the first activation information. The terminal receives the first activation information, and the terminal may determine the indicated second cycle based on the first index identifier included in the first activation information, and then send the first channel state information to the network device based on the determined second cycle.

There is a corresponding relationship between the first index identifier and the second cycle, and the second cycle corresponding to the first index identifier may be determined based on the corresponding relationship.

With the method according to embodiments of the disclosure, the network device instructs the terminal by means of the second cycle included in the first activation information, such that the terminal sends the first channel state information to the network device based on the second cycle, and the communication between the network device and the terminal is ensured and the communication quality between the network device and the terminal device is improved under the condition that the terminal sends the first channel state information periodically.

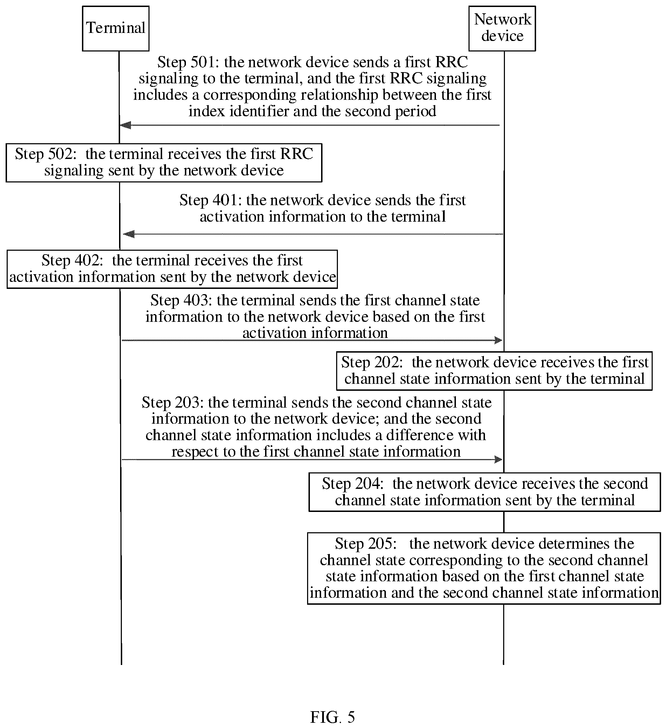

It should be noted that, the network device configures the corresponding relationship between the first index identifier and the second cycle for the terminal in advance. The method also includes steps at blocks 501-502 illustrated in FIG. 5.

At block 501, the network device sends a first radio resource control (RRC) signaling to the terminal, and the first RRC signaling includes the corresponding relationship between the first index identifier and the second cycle.

At block 502, the terminal receives the first RRC signaling sent by the network device.

In this embodiment of the disclosure, the terminal receives the first RRC signaling, and obtains the corresponding relationship between the first index identifier and the second cycle, which is configured for the terminal by the network device. The terminal may determine the second cycle corresponding to the first index identifier based on the corresponding relationship between the first index identifier and the second cycle after receiving the first index identifier.

It should be noted that, description is made in this embodiment of the disclosure merely by taking performing the steps at blocks 501-502 as an example. In another embodiment, the steps at blocks 501-502 are executed before the step at block 403 or before the step at block 401, which is not limited in the embodiments of the disclosure.

With the method according to this embodiment of the disclosure, the network device configures the corresponding relationship between the first index identifier and the second cycle for the terminal in advance, and the terminal may determine the corresponding second cycle based on the first index identifier, and then send the first channel state information based on the second cycle. The network device does not need to send the second cycle every time by configuring the corresponding relationship in advance, thereby saving a signaling overhead.

On the basis of the embodiment illustrated in FIG. 4, not only the network device activates the terminal to send the first channel state information, but also the network device deactivates the terminal to send the first channel state information.

In embodiments of the disclosure, the network device activates the terminal to send the first channel state information, and the network device deactivates the terminal subsequently, such that the terminal stops sending the first channel state information.

In some embodiments, the first activation information includes the number of transmissions. The terminal sends the first channel state information to the network device for the number of transmissions based on the first activation information.

In embodiments of the disclosure, the network device carries the number of transmissions in the first activation information. The terminal receives the first activation information, and obtains the number of transmissions included in the first activation information. The terminal sends the first channel state information based on the number transmissions, and the number of pieces of sent first channel state information is the same as the number of transmissions.

The number of transmissions may be 5, 6, 7 or other value, which is not limited in the embodiments of the disclosure.

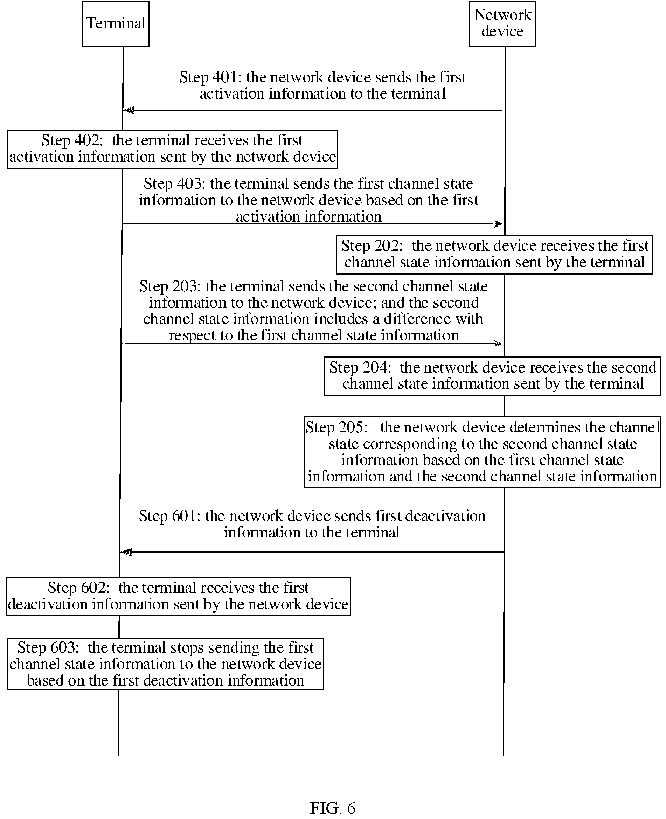

In another embodiment, as illustrated in FIG. 6, the method includes the following.

At block 601, the network device sends first deactivation information to the terminal.

At block 602, the terminal receives the first deactivation information sent by the network device.

In this embodiment of the disclosure, the network device activates, by the first activation information, the terminal to send the first channel state information. When there is a need to deactivate the terminal for sending the first channel state information, the network device sends the first deactivation information to the terminal, and the terminal receives the first deactivation information, and stops sending the first channel state information based on the first deactivation information.

In some embodiments, the first deactivation information is MAC CE information.

At block 603, the terminal stops sending the first channel state information to the network device based on the first deactivation information.

In this embodiment of the disclosure, the first deactivation information instructs the terminal to stop sending the first channel state information. The terminal determines that there is no need to send the first channel state information to the network device after receiving the first deactivation information, and then stops sending the first channel state information to the network device.

With the method according to embodiments of the disclosure, the network device instructs, by the number of transmissions in the first activation information or the first deactivation information, the terminal to stop sending the first channel state information, such that the terminal may determine that there is no need to send the first channel state information to the network device, thereby saving the signaling overhead.

On the basis of the embodiment illustrated in FIG. 2, the terminal may send the first channel state information non-periodically. Reference can be made to steps illustrated in FIF. 7.

At block 701, the network device sends first control information to the terminal, and the first control information indicates that the first channel state information is sent non-periodically.

At block 702, the terminal receives the first control information sent by the network device.

In this embodiment of the disclosure, the terminal sends the first channel state information to the network device in an aperiodic way. In this case, the terminal is instructed to send the first information state information through the first control information sent by the network device.

In case that the network device needs the terminal to feed back the first channel state information, the network device sends the first control information to the terminal, and the terminal sends the first channel state information based on the first control information after receiving the first control information.

At block 703, the terminal sends the first channel state information to the network device based on the first control information.

In this embodiment of the disclosure, the terminal receives the first control information, determines that the first channel state information needs to be reported, and then sends the first channel state information to the network device.

In some embodiments, the first control information is downlink control information (DCI).

With the method according to this embodiment of the disclosure, the network device instructs, by the first control information, the terminal to report the first channel state information, such that the terminal may send the first channel state information non-periodically, thereby improving an accuracy of reporting the first channel state information by the terminal.

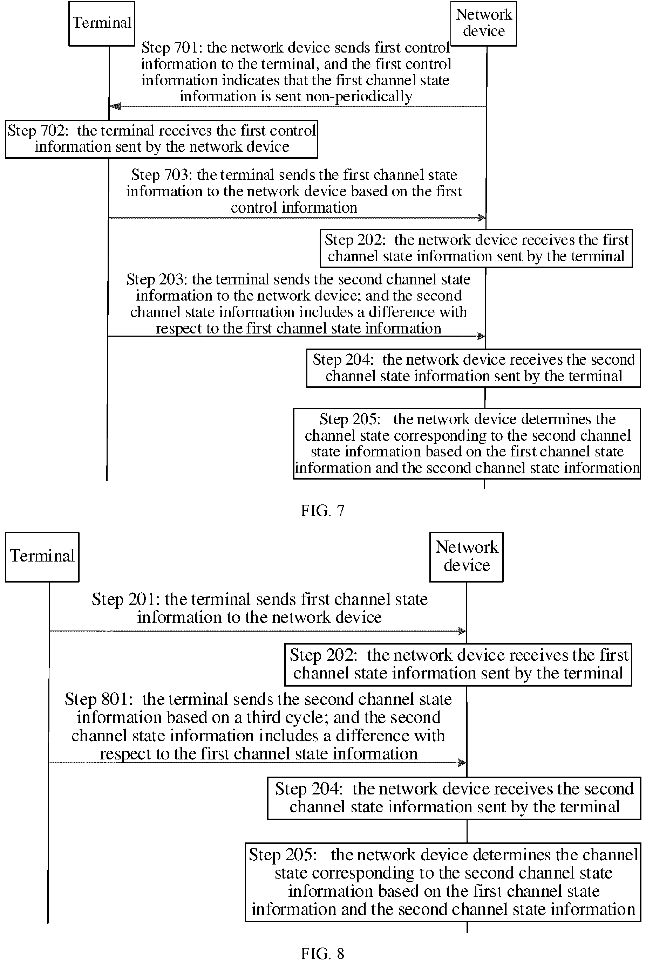

On the basis of the embodiment illustrated in FIG. 2, the terminal sends the second channel state information to the network device periodically. Steps illustrated in FIG. 8 are included.

At block 801, the terminal sends the second channel state information based on a third cycle.

In this embodiment of the disclosure, the terminal sends the second channel state information to the network device periodically, and a cycle for the terminal to send the second channel state information is the third cycle.

The third cycle is configured by the network device in advance, or set by the terminal, or agreed by the protocol.

In some embodiments, the third cycle is represented by a symbol, or represented by a time slot, or represented in other ways, which is not limited in the embodiments of the disclosure.

For example, the third cycle is 6 symbols, or the third cycle is 2 time slots, 3 time slots, or other numerical values.

In case that the third cycle is three slots, the terminal sends a piece of second channel state information in a first slot, sends a piece of second channel state information in a fourth slot, and sends a piece of second channel state information in a seventh slot, and so on, and continues to send the second channel state information based on the third cycle which is three slots.

In some embodiments, the third cycle may be an interval between two adjacent pieces of second channel state information. Intervals between any two adjacent pieces of second channel state information are same, that is, the second channel state information is sent periodically.

For example, the interval may be represented by a symbol, represented by a time slot, or represented in other ways.

The first point to be noted is that, in case that the interval is employed to indicate that the second channel state information is sent based on the third cycle, a difference between the third cycle and the interval is one unit. For example, in case that both the third cycle and the interval are represented by the time slot, and the third cycle is 4 time slots, then the interval is 3 time slots. Alternatively, in case that both the third cycle and the interval are represented by the symbol, and the third cycle is 6 symbols, then the interval is 5 symbols.

The second point to be noted is that, the second channel state information in this embodiment of the disclosure is sent based on the third cycle within a time interval between any two pieces of adjacent first channel state information.

In some embodiments, in case that the interval is employed to indicate that the second channel state information is sent based on the third cycle, and that the interval between any two pieces of second channel state information is an interval 1, at least one piece of second channel state information may be sent within the time interval between any two pieces of first channel state information. An interval between a piece of second channel state information earliest sent in the at least one piece of second channel state information and a piece of first channel state information sent recently before the piece of second channel state information earliest sent is also the interval 1, while an interval between a piece of second channel state information latest sent in the at least one piece of second channel state information and a piece of first channel state information sent recently after the piece of second channel state information latest sent is less than or equal to the interval 1.

With the method according to this embodiment of the disclosure, the terminal sends the second channel state information based on the third cycle, to ensure that the network device determines the channel state based on the second channel state information received periodically, to save the signaling overhead under a condition where a cycle of sending the channel state information is shortened, to ensure the communication between the network device and the terminal, and to improve the communication quality between the network device and the terminal device.

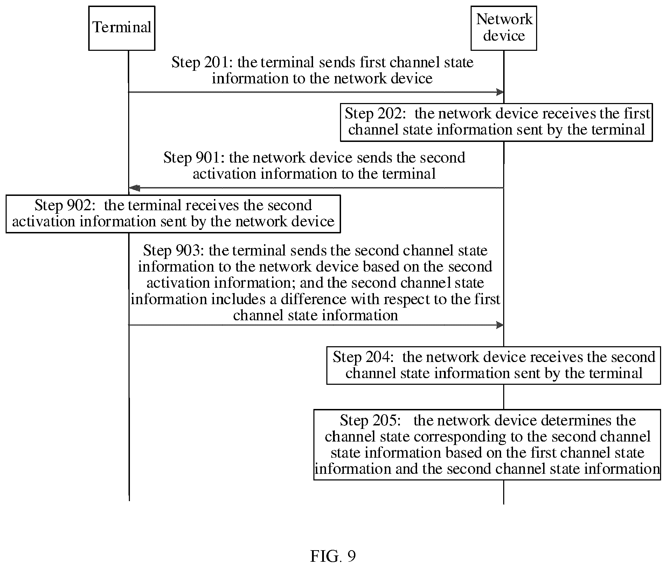

On the basis of the embodiment illustrated in FIG. 2, the terminal may be instructed, by second activation information sent from the network device, to send the second channel state information. Steps illustrated in FIG. 9 are included.

At block 901, the network device sends the second activation information to the terminal.

At block 902, the terminal receives the second activation information sent by the network device.

In this embodiment of the disclosure, the network device activates the terminal to send the second channel state information by sending the second activation information to the terminal.

In some embodiments, the second activation information is MAC CE, or other types of information, which is not limited in the embodiments of the disclosure.

It should be noted that, the second activation information in this embodiment of the disclosure is the same as the first activation information in the above embodiments, or the second activation information in this embodiment of the disclosure is different from the first activation information in the above embodiments, which is not limited in the embodiments of the disclosure.

At block 903, the terminal sends the second channel state information to the network device based on the second activation information.

The terminal receives the second activation information, and the second activation information instructs sending of the second channel state information, the terminal sends the second channel state information to the network device.

In some embodiments, the second activation information includes a fourth cycle, and the terminal obtains the fourth cycle included in the second activation information after receiving the second activation information, and determines that the second channel state information needs to be sent to the network device based on the fourth cycle. The terminal sends the second channel state information to the network device based on the fourth cycle according to the second activation information.

The fourth cycle may be represented by a symbol, represented by a time slot, or represented in other ways, which is not limited in the embodiments of the disclosure. For example, the fourth cycle is 6 symbols, 7 symbols, 2 time slots, 3 time slots or other numerical values, which is not limited in the embodiments of the disclosure.

In some embodiments, based on the second activation information, the terminal determines to send the second channel state information to the network device within a time period between time points of sending any two adjacent pieces of first channel state information starting from a j^{th} piece of first channel state information, where a time interval between a time point of sending the j^{th} piece of first channel state information and a time point of sending the second activation information needs to be greater than or equal to a time threshold.

j is a positive integer. The time threshold is set by the terminal, by the network equipment, or in other ways.

In a possible implementation, the second activation information includes a second index identifier, the fourth cycle corresponding to the second index identifier is determined based on the second index identifier included in the second activation information, and the second channel state information is sent to the network device based on the fourth cycle.

In embodiments of the disclosure, the network device indicates the fourth cycle by the second index identifier included in the second activation information. The terminal may determine the indicated fourth cycle based on the second index identifier included in the second activation information after receiving the second activation information, and then send the second channel state information to the network device based on the determined fourth cycle.

There is a corresponding relationship between the second index identifier and the fourth cycle, and the fourth cycle corresponding to the second index identifier may be determined based on the corresponding relationship.

It should be noted that, the second channel state information in embodiments of the disclosure is sent based on the fourth cycle within the time interval between any two adjacent pieces of first channel state information.

In some embodiments, in case that the interval is employed to indicate that the second channel state information is sent based on the fourth cycle, and that the interval between any two pieces of second channel state information is an interval 1, at least one piece of second channel state information may be sent within a time interval between any two pieces of first channel state information. An interval between the piece of second channel state information earliest sent in the at least one piece of second channel state information and the piece of first channel state information sent recently before the piece of second channel state information earliest sent is also the interval 1, and an interval between the piece of second channel state information latest sent in the at least one piece of second channel state information and the piece of first channel state information sent recently after the piece of second channel state information latest sent is less than or equal to the interval 1.

With the method according to embodiments of the disclosure, the network device instructs the terminal by the fourth cycle included in the second activation information, such that the terminal sends the second channel state information to the network device based on the fourth cycle, and the communication between the network device and the terminal is ensured under the condition where the terminal sends the second channel state information periodically, thereby improving the communication quality between the network device and the terminal device.

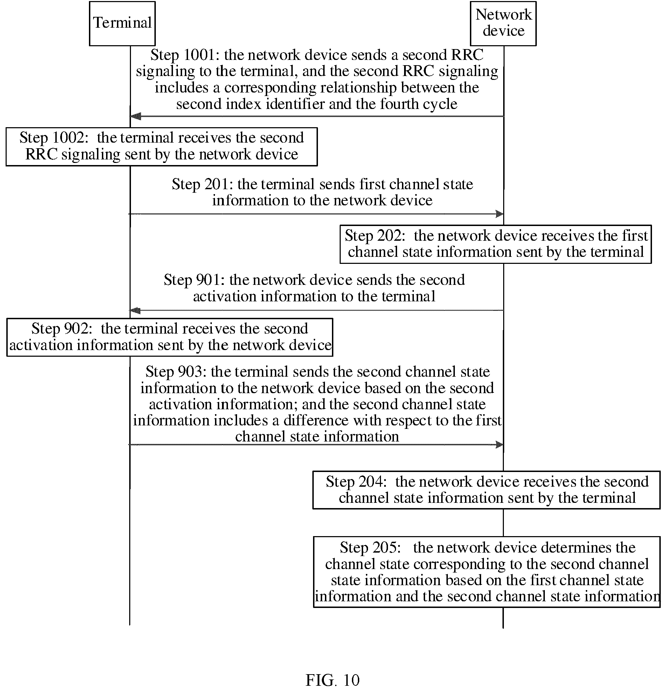

It should be noted that, the network device configures the corresponding relationship between the second index identifier and the fourth cycle in advance for the terminal. The method also includes steps at blocks 1001-1002 illustrated in FIG. 10:
At block 1001, the network device sends a second RRC signaling to the terminal, and the second RRC signaling includes the corresponding relationship between the second index identifier and the fourth cycle.

At block 1002, the terminal receives the second RRC signaling sent by the network device.

In this embodiment of the disclosure, the terminal receives the second RRC signaling, and obtains the corresponding relationship between the second index identifier and the fourth cycle, which is configured for the terminal by the network device. The terminal receives the second index identifier, and determines the fourth cycle corresponding to the second index identifier based on the corresponding relationship between the second index identifier and the fourth cycle.

It should be noted that, description is made in this embodiment of the disclosure merely by taking performing the steps at blocks 1001-1002 as an example. In another embodiment, the steps at blocks 1001-1002 are executed before the step at block 903 or before the step at block 901, which is not limited in the embodiments of the disclosure.

With the method according to embodiments of the disclosure, the network device configures the corresponding relationship between the second index identifier and the fourth cycle in advance for the terminal, and the terminal may determine the corresponding fourth cycle based on the second index identifier, and then send the second channel state information based on the fourth cycle, such that the network device does not need to send the fourth cycle every time by configuring the corresponding relationship in advance, thereby saving the signaling overhead.

On the basis of the embodiment illustrated in FIG. 9, not only the network device activates the terminal to send the second channel state information, but also the network device deactivates the terminal of sending the second channel state information.

In embodiments of the disclosure, the network device activates the terminal to send the second channel state information, and the network device deactivates the terminal subsequently to enable the terminal to stop sending the second channel state information.

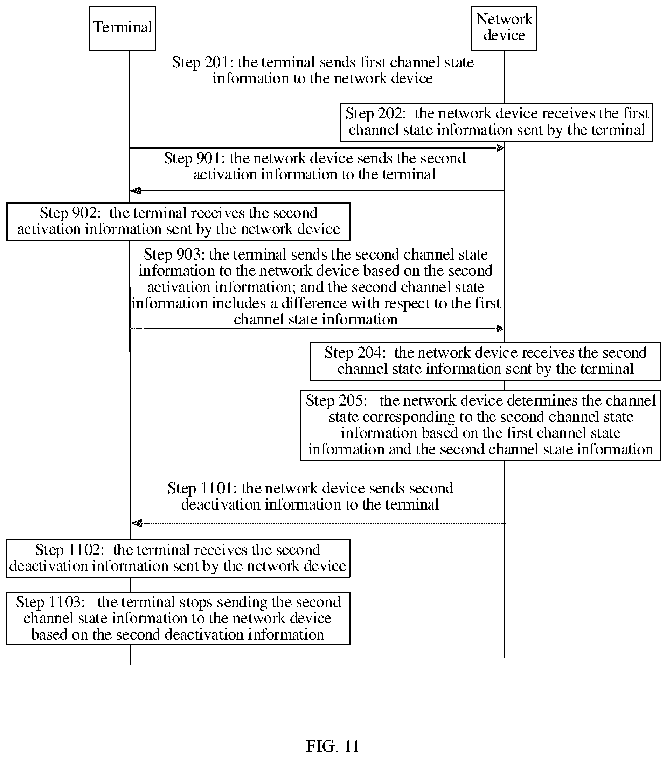

In some embodiments, as illustrated in FIG. 11, the method includes the following.

At block 1101, the network device sends second deactivation information to the terminal.

At block 1102, the terminal receives the second deactivation information sent by the network device.

In this embodiment of the disclosure, the network device activates, by the second activation information, the terminal to send the second channel state information. In case that there is a need to deactivate the terminal of sending the second channel state information, the network device sends the second deactivation information to the terminal, and the terminal receives the second deactivation information, and then stops sending the second channel state information based on the second deactivation information.

In some embodiments, the second deactivation information is MAC CE information.

At block 1103, the terminal stops sending the second channel state information to the network device based on the second deactivation information.

In this embodiment of the disclosure, the second deactivation information instructs the terminal to stop sending the second channel state information. The terminal determines that there is no need to send the second channel state information to the network device after receiving the second deactivation information, and then stops sending the second channel state information to the network device.

With the method according to this embodiment of the disclosure, the network device instructs, by the second deactivation information, the terminal to stop sending the second channel state information, such that the terminal may determine that there is no need to send the second channel state information to the network device, thereby saving the signaling overhead.

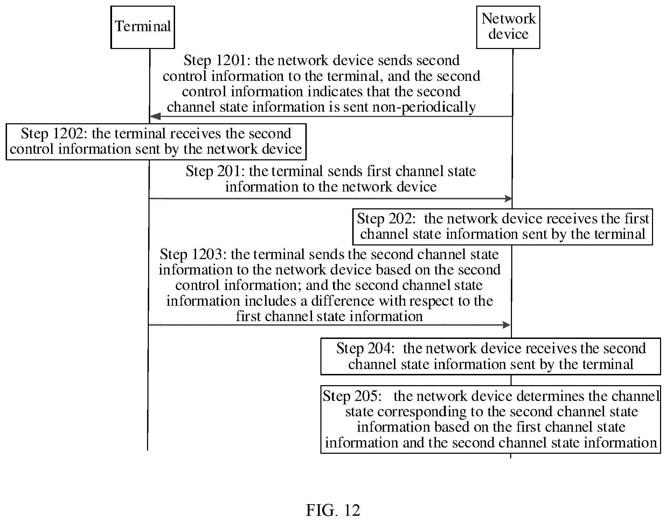

On the basis of the embodiment illustrated in FIG. 2, the terminal may send the second channel state information non-periodically. Reference may be made to steps illustrated in FIG. 12 in detail.

At block 1201, the network device sends second control information to the terminal, and the second control information indicates that the second channel state information is sent non-periodically.

At block 1202, the terminal receives the second control information sent by the network device.

In this embodiment of the disclosure, the terminal sends the second channel state information to the network device in the aperiodic way. In this case, the terminal is instructed, by the second control information sent from the network device, to send the second information state information.

In case that the network device needs the terminal to feed back the second channel state information, the network device sends the second control information to the terminal, and the terminal sends the second channel state information based on the second control information after receiving the second control information.

At block 1203, the terminal sends the second channel state information to the network device based on the second control information.

In this embodiment of the disclosure, the terminal receives the second control information, determines that the second channel state information needs to be reported, and sends the second channel state information to the network device.

In some embodiments, the terminal determines an i^{th} piece of first channel state information and an (i+1)^{th} piece of first channel state information based on the second control information, and sends the second channel state information to the network device within a time period between a time point of sending the i^{th} piece of first channel state information and a time point of sending the (i+1)^{th} piece of first channel state information, where i is a positive integer.

In a possible implementation, the terminal determines the i^{th} piece of first channel state information and sends the (i+1)^{th} piece of first channel state information in any of following ways.
(1) The second control information includes indication information, and the indicated i^{th} piece of first channel state information and the indicated (i+1)^{th} piece of first channel state information are determined based on the indication information.
(2) Two pieces of first channel state information recently after T time period starting from sending the second control information are determined as the i^{th} piece of first channel state information and the (i+1)^{th} piece of first channel state information.

T is a positive integer. The T time period is expressed by a time slot, by a symbol, or in other ways. For example, the T time period is 2 milliseconds, 2 slots, or 6 symbols.

In some embodiments, according to the second control information, the terminal sends the second channel state information to the network device based on a fifth cycle within a time period after sending the first channel state information.

In some embodiments, the terminal determines the fifth cycle corresponding to a third index identifier based on the third index identifier included in the second control information, and sends the second channel state information to the network device based on the fifth cycle.

It should be noted that, the second channel state information in embodiments of the disclosure is sent based on the fifth cycle within the time interval between two adjacent pieces of first channel state information.

In some embodiments, in case that the interval is employed to indicate that the second channel state information is sent based on the fifth cycle, and that the interval between any two pieces of second channel state information is an interval 1, at least one piece of second channel state information may be sent within the time interval between any two pieces of first channel state information. An interval between the piece of second channel state information earliest sent in the at least one piece of second channel state information and the piece of first channel state information sent recently before the piece of second channel state information earliest sent is also the interval 1, and an interval between the piece of second channel state information latest sent in the at least one piece of second channel state information and the piece of first channel state information sent recently after the piece of second channel state information latest sent is less than or equal to the interval 1.

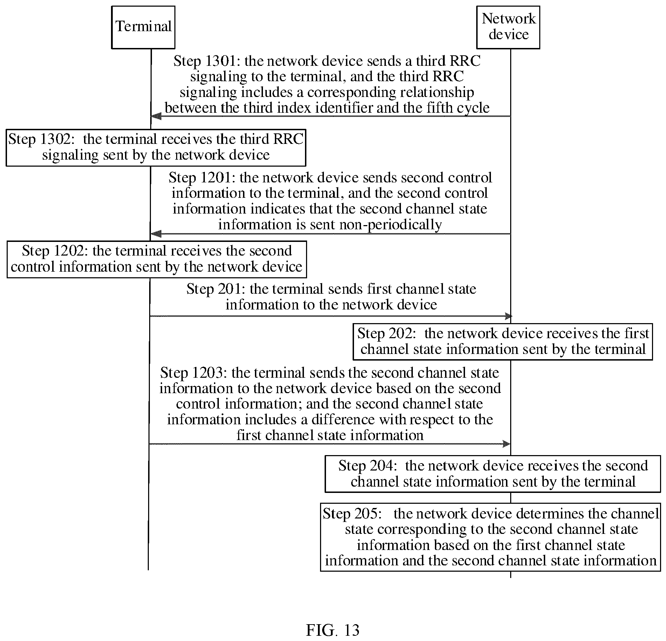

It should be noted that, the network device configures a corresponding relationship between the third index identifier and the fifth cycle in advance for the terminal. The method also includes steps at blocks 1301-1302 illustrated in FIG. 13:
At block 1301, the network device sends a third RRC signaling to the terminal, and the third RRC signaling includes the corresponding relationship between the third index identifier and the fifth cycle.

At block 1302, the terminal receives the third RRC signaling sent by the network device.

In this embodiment of the disclosure, the terminal receives the third RRC signaling, and obtains the corresponding relationship between the third index identifier and the fifth cycle, which is configured for the terminal by the network device. After receiving the third index identifier, the terminal may determine the fifth cycle corresponding to the third index identifier based on the corresponding relationship between the third index identifier and the fifth cycle.

In some embodiments, the second control information is DCI information.

It should be noted that, the second control information in this embodiment of the disclosure is the same as the first control information in the above embodiments, or the second control information in this embodiment of the disclosure is different from the first control information in the above embodiments.

With the method according to this embodiment of the disclosure, the network device instructs, through the second control information, the terminal to report the second channel state information, so that the terminal sends the second channel state information non-periodically, thereby improving an accuracy of reporting the second channel state information by the terminal.

On the basis of the embodiment illustrated in FIG. 2, the network device may send feedback information based on the received second channel state information. In some embodiments, the feedback information of the second channel state information is generated based on any one of followings.
(1) A broadband.
(2)A narrow band.
   It should be noted that, in embodiments of the disclosure, the broadband is a whole bandwidth while the narrow band is determined based on a subband.
(3)Multiple ports.
(4) Each port in the multiple ports.
(5) Multiple beams.
(6) Each beam in the multiple beams.

It should be noted that, the above embodiments may be combined with each other, and a specific way of combining the embodiments is not limited in the disclosure.

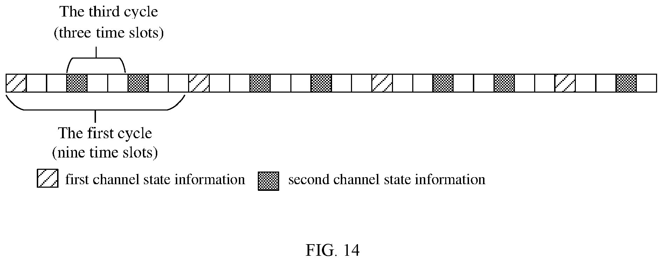

For example, the above embodiment in which the first channel state information illustrated in FIG. 3 is reported based on the first cycle may be combined with the above embodiment in which the second channel state information illustrated in FIG. 8 is reported based on the third cycle. As illustrated in FIG. 14, the terminal sends one piece of first channel state information every nine slots, and sends one piece of second channel state information every three slots.

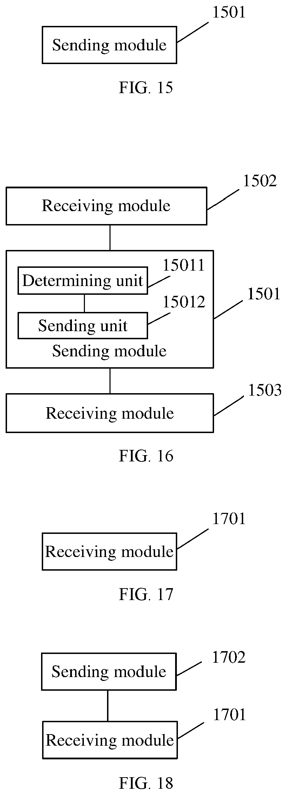

FIG. 15 is a block diagram illustrating an apparatus for reporting information according to an embodiment of the disclosure. Referring to FIG. 15, the apparatus includes:
a sending module 1501, configured to send first channel state information to a network device.

The sending module 1501 is configured to send second channel state information to the network device, and the second channel state information includes a difference with respect to the first channel state information.

In some embodiments, the first channel state information is reported at a first reporting time and the second channel state information is reported at a second reporting time.

In some embodiments, the first channel state information includes at least one of:
a CRI;
an RI;
a PMI;
a CQI;
an LI;
an SSBRI;
an L1-RSRP;
an L1-SINR;
a Doppler migration;
a Doppler spread;
an average delay; or
a delay spread.

In some embodiments, the second channel state information includes at least one of:
a CRI;
an RI;
a PMI;
a CQI;
an LI;
an SSBRI;
an L1-RSRP;
an L1-SINR;
a Doppler migration;
a Doppler spread;
an average delay; or
a delay spread.

In some embodiments, the sending module 1501 is configured to send the first channel state information based on a first cycle.

In some embodiments, referring to FIG. 16, the apparatus includes a receiving module 1502, configured to receive first activation information sent by the network device.

The sending module 1501 is configured to send the first channel state information to the network device based on the first activation information.

In some embodiments, the first activation information includes a second cycle. The sending module 1501 is configured to send the first channel state information to the network device based on the second cycle according to the first activation information.

In some embodiments, the first activation information includes a first index identifier. Referring to FIG. 16, the sending module 1501 includes:
a determining unit 15011, configured to determine the second cycle corresponding to the first index identifier based on the first index identifier included in the first activation information; and
a sending unit 15012, configured to send the first channel state information to the network device based on the second cycle.

In some embodiments, referring to FIG. 16, the apparatus further includes:
a receiving module 1502, configured to receive a first radio resource control (RRC) signaling sent by the network device. The first RRC signaling includes a corresponding relationship between the first index identifier and the second cycle.

In some embodiments, the first activation information includes a number of transmissions. The sending module 1501 is configured to send the first channel state information to the network device for the number of transmissions based on the first activation information.

In some embodiments, referring to FIG. 16, the apparatus further includes:
a receiving module 1502, configured to receive first deactivation information sent by the network device; and
a stopping module 1503, configured to stop sending the first channel state information to the network device based on the first deactivation information.

In some embodiments, the first activation information and/or the first deactivation information is media access control (MAC) control element (CE) information.

In some embodiments, referring to FIG. 16, the apparatus further includes:
the receiving module 1502, configured to receive first control information sent by the network device, the first control information indicating that the first channel state information is sent non-periodically; and
the sending module 1501, configured to send the first channel state information to the network device based on the first control information.

In some embodiments, the first control information is downlink control information (DCI).

In some embodiments, the sending module 1501 is configured to send the second channel state information based on a third cycle.

In some embodiments, referring to FIG. 16, the apparatus further includes:
the receiving module 1502, configured to receive second activation information sent by the network device; and
the sending module 1501, configured to send the second channel state information to the network device based on the second activation information.

In some embodiments, the second activation information includes a fourth cycle. The sending module 1501 is configured to send the second channel state information to the network device based on the fourth cycle according to the second activation information.

In some embodiments, the second activation information includes a second index identifier. Referring to FIG. 16, the sending module 1501 includes:
the determining unit 15011, configured to determine the fourth cycle corresponding to the second index identifier based on the second index identifier included in the second activation information; and
the sending unit 15012, configured to send the second channel state information to the network device based on the fourth cycle.

In some embodiments, referring to FIG. 16, the apparatus further includes:
the receiving module 1502, configured to receive a second RRC signaling sent by the network device, in which the second RRC signaling includes a corresponding relationship between the second index identifier and the fourth cycle.

In some embodiments, referring to FIG. 16, the apparatus further includes:
the receiving module 1502, configured to receive second deactivation information sent by the network device; and
the stopping module 1503, configured to stop sending the second channel state information to the network device based on the second deactivation information.

In some embodiments, the second activation information and/or the second deactivation information is MAC CE information.

In some embodiments, referring to FIG. 16, the apparatus further includes:
the receiving module 1502, configured to receive second control information sent by the network device, the second control information indicating that the second channel state information is sent non-periodically; and
the sending module 1501, configured to, based on the second control information, send the second channel state information to the network device within a time period after the first channel state information is sent.

In some embodiments, the first channel state information is sent periodically. Referring to FIG. 16, the sending module 1501 includes:
the determining unit 15011, configured to determine an i^{th} piece of first channel state information and an (i+1)^{th} piece of first channel state information based on the second control information, where i is a positive integer; and
the sending unit 15012, configured to send the second channel state information to the network device during a time period between a time point of sending the i^{th} piece of first channel state information and a time point of sending the (i+1)^{th} piece of first channel state information.

In some embodiments, the determining unit 15011 is configured to:
determine the i^{th} piece of first channel state information and the (i+1)^{th} piece of first channel state information based on indication information, in which the second control information includes the indication information; or,
determine two pieces of first channel state information recently after a T time period starting from receiving the second control information as the i^{th} piece of first channel state information and the (i+1)^{th} piece of first channel state information.

In some embodiments, the second control information includes a fifth cycle. The sending module 1501 is configured to, according to the second control information, send the second channel state information to the network device based on the fifth cycle within the time period after the first channel state information is sent.

In some embodiments, the second control information includes a third index identifier. Referring to FIG. 16, the sending module 1501 includes:
the determining unit 15011, configured to determine the fifth cycle corresponding to the third index identifier based on the third index identifier included in the second control information; and
the sending unit 15012, configured to send the second channel state information to the network device based on the fifth cycle.

In some embodiments, referring to FIG. 16, the apparatus further includes:
the receiving module 1502, configured to receive a third RRC signaling sent by the network device, the third RRC signaling including a corresponding relationship between the third index identifier and the fifth cycle.

In some embodiments, the second control information is DCI information.

In some embodiments, the second channel state information is carried on a physical uplink control channel (PUCCH), or the second channel state information is carried on a physical uplink shared channel (PUSCH).

In some embodiments, feedback information of the second channel state information is generated based on any one of:
a broadband; or
a narrow band; or
multiple ports; or
each port in the multiple ports; or
multiple beams; or
each beam in the multiple beams.

FIG. 17 is a block diagram illustrating an apparatus for reporting information according to an embodiment of the disclosure. Referring to FIG. 17, the apparatus includes:
a receiving module 1701, configured to receive first channel state information sent by a terminal.

The receiving module 1701 is configured to receive second channel state information sent by the terminal, and the second channel state information including a difference with respect to the first channel state information.

In some embodiments, the first channel state information is reported at a first reporting time, and the second channel state information is reported at a second reporting time.

In some embodiments, the first channel state information includes at least one of:
a CRI;
an RI;
a PMI;
a CQI;
an LI;
an SSBRI;
an L1-RSRP;
an L1-SINR;
a Doppler migration;
a Doppler spread;
an average delay; or
a delay spread.

In some embodiments, the second channel state information includes at least one of:
a CRI;
an RI;
a PMI;
a CQI;
an LI;
an SSBRI;
an L1-RSRP;
an L1-SINR;
a Doppler migration;
a Doppler spread;
an average delay; or
a delay spread.

In some embodiments, the first channel state information is sent based on a first cycle.

In some embodiments, referring to FIG. 18, the apparatus further includes:
the sending module 1702, configured to send first activation information to the terminal.

The first activation information instructs the terminal to send the first channel state information to the network device.

In some embodiments, the first activation information includes a second cycle.

The first activation information instructs the terminal to send the first channel state information to the network device based on the second cycle.

In some embodiments, the first activation information includes a first index identifier.

The terminal is configured to determine the second cycle corresponding to the first index identifier based on the first index identifier included in the first activation information; and to send the first channel state information to the network device based on the second cycle.

In some embodiments, referring to FIG. 18, the apparatus further includes:
the sending module 1702, configured to send a first radio resource control (RRC) signaling to the terminal, the first RRC signaling including a corresponding relationship between the first index identifier and the second cycle.

In some embodiments, the first activation information includes a number of transmissions.

The first activation information instructs the terminal to send the first channel state information to the network device for the number of transmissions.

In some embodiments, referring to FIG. 18, the apparatus further includes:
the sending module 1702, configured to send first deactivation information to the terminal.

The first deactivation information instructs the terminal to stop sending the first channel state information to the network device.

In some embodiments, the first activation information and/or the first deactivation information is media access control (MAC) control element (CE) information.

In some embodiments, referring to FIG. 18, the apparatus further includes:
the sending module 1702, configured to send first control information to the terminal. The first control information indicates that the first channel state information is sent non-periodically.

The first control information instructs the terminal to send the first channel state information to the network device.

In some embodiments, the first control information is downlink control information (DCI).

In some embodiments, the second channel state information is sent based on a third cycle.

In some embodiments, referring to FIG. 18, the apparatus further includes:
the sending module 1702, configured to send second activation information to the terminal.

The second activation information instructs the terminal to send the second channel state information to the network device.

In some embodiments, the second activation information includes a fourth cycle.

The second activation information instructs the terminal to send the second channel state information to the network device based on the fourth cycle.

In some embodiments, the second activation information includes a second index identifier.

The terminal is configured to determine the fourth cycle corresponding to the second index identifier based on the second index identifier included in the second activation information; and to send the second channel state information to the network device based on the fourth cycle.

In some embodiments, referring to FIG. 18, the apparatus further includes:
the sending module 1702, configured to send a second RRC signaling to the terminal. The second RRC signaling includes a corresponding relationship between the second index identifier and the fourth cycle.

In some embodiments, referring to FIG. 18, the apparatus further includes:
the sending module 1702, configured to send second deactivation information to the terminal.

The second deactivation information instructs the terminal to stop sending the second channel state information to the network device.

In some embodiments, the second activation information and/or the second deactivation information is MAC CE information.

In some embodiments, referring to FIG. 18, the apparatus further includes:
the sending module 1702, configured to send second control information to the terminal. The second control information indicates that the second channel state information is sent non-periodically.

The second control information instructs the terminal to send the second channel state information to the network device within a time period after the first channel state information is sent.

In some embodiments, the first channel state information is sent periodically, and the terminal determines an i^{th} piece of first channel state information and an (i+1)^{th} piece of first channel state information based on the second control information, where i is a positive integer; and sends the second channel state information to the network device within a time period between a time point of sending the i^{th} piece of first channel state information and a time point of sending the (i+1)^{th} piece of first channel state information.

In some embodiments, the second control information includes indication information, and the indication information indicates the i^{th} piece of first channel state information and the (i+1)^{th} piece of first channel state information ; or,
two pieces of first channel state information after the second control information are determined as the i^{th} piece of first channel state information and the (i+1)^{th} piece of first channel state information.

In some embodiments, the second control information includes a fifth cycle. The second control information instructs the terminal to send the second channel state information to the network device based on the fifth cycle within the time period after the first channel state information is sent.

In some embodiments, the second control information includes a third index identifier.

The terminal is configured to determine the fifth cycle corresponding to the third index identifier based on the third index identifier included in the second control information; and to send the second channel state information to the network device based on the fifth cycle.

In some embodiments, referring to FIG. 18, the apparatus further includes
the sending module 1702, configured to send a third RRC signaling to the terminal. The third RRC signaling includes a corresponding relationship between the third index identifier and the fifth cycle.

In some embodiments, the second control information is DCI information.

In some embodiments, the second channel state information is carried on a physical uplink control channel (PUCCH), or the second channel state information is carried on a physical uplink shared channel (PUSCH).

In some embodiments, feedback information of the second channel state information is generated based on any one of:
a broadband; or
a narrow band; or
multiple ports; or
each port in the multiple ports; or
multiple beams; or
each beam in the multiple beams.

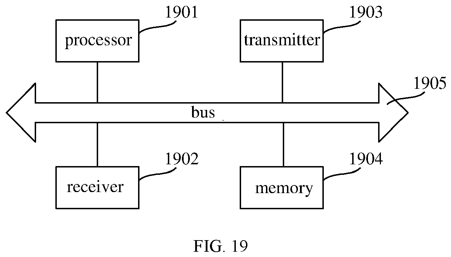

FIG. 19 is a block diagram illustrating a communication device according to an embodiment of the disclosure. The communication device includes a processor 1901, a receiver 1902, a transmitter 1903, a memory 1904 and a bus 1905.

The processor 1901 includes one or more processing cores. The processor 1901 is configured to execute various functional applications and information processing by running software programs and modules.

The receiver 1902 and the transmitter 1903 may be implemented as a communication component. The communication component may be a communication chip.

The memory 1904 is connected to the processor 1901 through the bus 1905.

The memory 1904 may be configured to store at least one program code. The processor 1901 is configured to execute the at least one program code to implement the steps in the above method embodiments.

In addition, the communication device may be the terminal or the network device. The memory 1904 may be implemented by any type of volatile or nonvolatile memory devices or a combination thereof. The volatile or nonvolatile memory device includes, but not limited to: a magnetic disk or optical disk, an electrically erasable programmable read-only memory (EEPROM), an erasable programmable read-only memory (EPROM), a static random access memory (SRAM), a read-only memory (ROM), a magnetic memory, a flash memory and a programmable read-only memory (PROM).

In an exemplary embodiment, there is also provided a computer readable storage medium having executable program codes stored thereon. The executable program codes are loaded and executed by a processor to cause the processor to implement the method for reporting information executed by the communication device according to any of the above method embodiments.

In an embodiment, there is provided a chip. The chip includes a programmable logic circuit and/or program instructions. The chip is configured to implement the method for reporting information according to any of the method embodiments when the chip runs on the terminal or the network device.

In an exemplary embodiment, there is provided a computer program product. The computer program product is configured to implement the method for reporting information according to any of the above method embodiments when executed by a processor of the terminal or the network device.

Those skilled in the art may understand that all or part of the steps to implement the above embodiments may be completed by hardware, or completed by a program to instruct related hardware. All the programs may be stored in a computer-readable storage medium. The above-mentioned storage medium may be the read-only memory, the magnetic disk or the optical disk, etc.

The above is merely an alternative embodiment of the disclosure, which is not configured to limit the disclosure. Any modification, equivalent substitution, improvement and the like made within the spirit and principle of the disclosure should be included in a protection scope of the disclosure.

## Claims

1. A method for reporting information, performed by a terminal, comprising:
sending first channel state information to a network device; and
sending second channel state information to the network device, wherein the second channel state information comprises a difference with respect to the first channel state information.

2. The method of claim 1, wherein the first channel state information is reported at a first reporting time and the second channel state information is reported at a second reporting time.

3. The method of claim 1 or 2, wherein the first channel state information comprises at least one of:
a channel state information reference signal (CSI-RS) resource indicator (CRI);
a rank indicator (RI);
a precoding matrix indicator (PMI);
a channel quality indicator (CQI);
a layer indicator (LI);
a synchronization signal /physical broadcast signal block resource indicator (SSBRI);
a layer-1 reference signal received power (L1-RSRP);
a layer-1 signal to interference plus noise ratio (L1-SINR);
a Doppler migration;
a Doppler spread;
an average delay; or
a delay spread.

4. The method of claim 1 or 2, wherein the second channel state information comprises at least one of:
a CRI;
an RI;
a PMI;
a CQI;
an LI;
an SSBRI;
an L1-RSRP;
an L1-SINR;
a Doppler migration;
a Doppler spread;
an average delay; or
a delay spread.

5. The method of any of claims 1 to 4, wherein sending the first channel state information to the network device comprises:
sending the first channel state information based on a first cycle.

6. The method of any of claims 1 to 4, wherein sending the first channel state information to the network device comprises:
receiving first activation information sent by the network device; and
sending the first channel state information to the network device based on the first activation information.

7. The method of claim 6, wherein the first activation information comprises a second cycle, and sending the first channel state information to the network device based on the first activation information comprises:
sending the first channel state information to the network device based on the second cycle according to the first activation information.

8. The method of claim 7, wherein the first activation information comprises a first index identifier, and sending the first channel state information to the network device based on the second cycle according to the first activation information comprises:
determining the second cycle corresponding to the first index identifier based on the first index identifier comprised in the first activation information; and
sending the first channel state information to the network device based on the second cycle.

9. The method of claim 8, further comprising:
receiving a first radio resource control (RRC) signaling sent by the network device, wherein the first RRC signaling comprises a corresponding relationship between the first index identifier and the second cycle.

10. The method of any of claims 6 to 9, wherein the first activation information comprises a number of transmissions, and sending the first channel state information to the network device according to the first activation information comprises:
sending the first channel state information to the network device for the number of transmissions based on the first activation information.

11. The method of any of claims 6 to 9, further comprising:
receiving first deactivation information sent by the network device; and
stopping sending the first channel state information to the network device based on the first deactivation information.

12. The method of any of claims 6 to 11, wherein the first activation information and/or the first deactivation information is media access control (MAC) control element (CE) information.

13. The method of any of claims 1 to 4, wherein sending the first channel state information to the network device comprises:
receiving first control information sent by the network device, wherein the first control information indicates that the first channel state information is sent non-periodically; and
sending the first channel state information to the network device based on the first control information.

14. The method of claim 13, wherein the first control information is downlink control information (DCI).

15. The method of any of claims 1 to 4, wherein sending the second channel state information to the network device comprises:
sending the second channel state information based on a third cycle.

16. The method of any of claims 1 to 4, wherein sending the second channel state information to the network device comprises:
receiving second activation information sent by the network device; and
sending the second channel state information to the network device based on the second activation information.

17. The method of claim 16, wherein the second activation information comprises a fourth cycle; and sending the second channel state information to the network device based on the second activation information comprises:
sending the second channel state information to the network device based on the fourth cycle according to the second activation information.

18. The method of claim 17, wherein the second activation information comprises a second index identifier; and sending the second channel state information to the network device based on the fourth cycle according to the second activation information comprises:
determining the fourth cycle corresponding to the second index identifier based on the second index identifier comprised in the second activation information; and
sending the second channel state information to the network device based on the fourth cycle.

19. The method of claim 18, further comprising:
receiving a second RRC signaling sent by the network device, wherein the second RRC signaling comprises a corresponding relationship between the second index identifier and the fourth cycle.

20. The method of any of claims 16 to 19, further comprising:
receiving second deactivation information sent by the network device; and
stopping sending the second channel state information to the network device based on the second deactivation information.

21. The method of any of claims 16 to 20, wherein the second activation information and/or the second deactivation information is MAC CE information.

22. The method of any of claims 1 to 4, wherein sending the second channel state information to the network device comprises:
receiving second control information sent by the network device, wherein the second control information indicates that the second channel state information is sent non-periodically; and
based on the second control information, sending the second channel state information to the network device within a time period after the first channel state information is sent.

23. The method of claim 22, wherein the first channel state information is sent periodically, and based on the second control information, sending the second channel state information to the network device within the time period after the first channel state information is sent comprises:
determining an i^{th} piece of first channel state information and an (i+1)^{th} piece of first channel state information based on the second control information, where i is a positive integer; and
sending the second channel state information to the network device within a time period between a time point of sending the i^{th} piece of first channel state information and a time point of sending the (i+1)^{th} piece of first channel state information.

24. The method of claim 23, wherein determining the i^{th} piece of first channel state information and the (i+1)^{th} piece of first channel state information based on the second control information comprises:
determining the i^{th} piece of first channel state information and the (i+1)^{th} piece of first channel state information based on indication information, wherein the second control information comprises the indication information; or,
determining two pieces of first channel state information recently after a T time period starting from receiving the second control information as the i^{th} piece of first channel state information and the (i+1)^{th} piece of first channel state information.

25. The method of any of claims 22 to 24, wherein the second control information comprises a fifth cycle; and based on the second control information, sending the second channel state information to the network device within the time period after the first channel state information is sent comprises:
based on the second control information, sending the second channel state information to the network device based on the fifth cycle within the time period after the first channel state information is sent.

26. The method of claim 25, wherein the second control information comprises a third index identifier; and based on the second control information, sending the second channel state information to the network device based on the fifth cycle within the time period after the first channel state information is sent comprises:
determining the fifth cycle corresponding to the third index identifier based on the third index identifier comprised in the second control information; and
sending the second channel state information to the network device based on the fifth cycle.

27. The method of claim 26, further comprising:
receiving a third RRC signaling sent by the network device, wherein the third RRC signaling comprises a corresponding relationship between the third index identifier and the fifth cycle.

28. The method according to any of claims 22 to 27, wherein the second control information is DCI information.

29. The method of any of claims 1 to 28, wherein the second channel state information is carried on a physical uplink control channel (PUCCH), or the second channel state information is carried on a physical uplink shared channel (PUSCH).

30. The method of any of claims 1 to 29, wherein feedback information of the second channel state information is generated based on any one of:
a broadband; or
a narrow band; or
multiple ports; or
each port in the multiple ports; or
multiple beams; or
each beam in the multiple beams.

31. A method for reporting information, performed by a network device, comprising:
receiving first channel state information sent by a terminal; and
receiving second channel state information sent by the terminal, wherein the second channel state information comprises a difference with respect to the first channel state information.

32. The method of claim 31, wherein the first channel state information is reported at a first reporting time and the second channel state information is reported at a second reporting time.

33. The method of claim 31 or 32, wherein the first channel state information comprises at least one of:
a channel state information reference signal (CSI-RS) resource indicator (CRI);
a rank indicator (RI);
a precoding matrix indicator (PMI);
a channel quality indicator (CQI);
a layer indicator (LI);
a synchronization signal /physical broadcast signal block resource indicator (SSBRI);
a layer-1 reference signal received power (L1-RSRP);
a layer-1 signal to interference plus noise ratio (L1-SINR);
a Doppler migration;
a Doppler spread;
an average delay; or
a delay spread.

34. The method of claim 31 or 32, wherein the second channel state information comprises at least one of:
a CRI;
an RI;
a PMI;
a CQI;
an LI;
an SSBRI;
an L1-RSRP;
an L1-SINR;
a Doppler migration;
a Doppler spread;
an average delay; or
a delay spread.

35. The method of any of claims 32 to 34, wherein the first channel state information is sent based on a first cycle.

36. The method of any of claims 32 to 34, further comprising:
sending first activation information to the terminal;
wherein the first activation information instructs the terminal to send the first channel state information to the network device.

37. The method of claim 36, wherein the first activation information comprises a second cycle; and
the first activation information instructs the terminal to send the first channel state information to the network device based on the second cycle.

38. The method of claim 37, wherein the first activation information comprises a first index identifier; and
the terminal is configured to determine the second cycle corresponding to the first index identifier based on the first index identifier comprised in the first activation information; and to send the first channel state information to the network device based on the second cycle.

39. The method of claim 38, further comprising:
sending a first radio resource control (RRC) signaling to the terminal, wherein the first RRC signaling comprises a corresponding relationship between the first index identifier and the second cycle.

40. The method of any of claims 36 to 39, wherein the first activation information comprises a number of transmissions; and
the first activation information instructs the terminal to send the first channel state information to the network device for the number of transmissions.

41. The method of any of claims 36 to 39, further comprising:
sending first deactivation information to the terminal; and
wherein the first deactivation information instructs the terminal to stop sending the first channel state information to the network device.

42. The method of any of claims 36 to 41, wherein the first activation information and/or the first deactivation information is media access control (MAC) control element (CE) information.

43. The method of any of claims 32 to 34, further comprising:
sending first control information to the terminal, wherein the first control information indicates that the first channel state information is sent non-periodically;
wherein the first control information instructs the terminal to send the first channel state information to the network device.

44. The method of claim 43, wherein the first control information is downlink control information (DCI).

45. The method of any of claims 32 to 34, wherein the second channel state information is sent based on a third cycle.

46. The method of any of claims 32 to 34, further comprising:
sending second activation information to the terminal;
wherein the second activation information instructs the terminal to send the second channel state information to the network device.

47. The method of claim 46, wherein the second activation information comprises a fourth cycle; and the second activation information instructs the terminal to send the second channel state information to the network device based on the fourth cycle.

48. The method of claim 47, wherein the second activation information comprises a second index identifier; and
the terminal is configured to determine the fourth cycle corresponding to the second index identifier based on the second index identifier comprised in the second activation information; and to send the second channel state information to the network device based on the fourth cycle.

49. The method of claim 48, further comprising:
sending a second RRC signaling to the terminal, wherein the second RRC signaling comprises a corresponding relationship between the second index identifier and the fourth cycle.

50. The method of any of claims 46 to 49, further comprising:
sending second deactivation information to the terminal;
wherein the second deactivation information instructs the terminal to stop sending the second channel state information to the network device.

51. The method of any of claims 46 to 50, wherein the second activation information and/or the second deactivation information is MAC CE information.

52. The method of any of claims 32 to 34, further comprising:
sending second control information to the terminal, wherein the second control information indicates that the second channel state information is sent non-periodically;
wherein the second control information instructs the terminal to send the second channel state information to the network device within a time period after the first channel state information is sent.

53. The method of claim 52, wherein the first channel state information is sent periodically, and the terminal determines an i^{th} piece of first channel state information and an (i+1)^{th} piece of first channel state information based on the second control information, where i is a positive integer; and sends the second channel state information to the network device within a time period between a time point of sending the i^{th} piece of first channel state information and a time point of sending the (i+1)^{th} piece of first channel state information.

54. The method of claim 53, wherein the second control information comprises indication information, the indication information indicates the i^{th} piece of first channel state information and the (i+1)^{th} piece of first channel state information ; or,
two pieces of first channel state information after the second control information are determined as the i^{th} piece of first channel state information and the (i+1)^{th} piece of first channel state information.

55. The method of any of claims 52 to 54, wherein the second control information comprises a fifth cycle;
the second control information instructs the terminal to send the second channel state information to the network device based on the fifth cycle within the time period after the first channel state information is sent.

56. The method of claim 55, wherein the second control information comprises a third index identifier; and
the terminal is configured to determine the fifth cycle corresponding to the third index identifier based on the third index identifier comprised in the second control information; and to send the second channel state information to the network device based on the fifth cycle.

57. The method of claim 56, further comprising:
sending a third RRC signaling to the terminal, wherein the third RRC signaling comprises a corresponding relationship between the third index identifier and the fifth cycle.

58. The method according to any of claims 52 to 57, wherein the second control information is DCI information.

59. The method according to any of claims 52 to 58, wherein the second channel state information is carried on a physical uplink control channel (PUCCH), or the second channel state information is carried on a physical uplink shared channel (PUSCH).

60. The method of any of claims 32 to 59, wherein feedback information of the second channel state information is generated based on any one of:
a broadband; or
a narrow band; or
multiple ports; or
each port in the multiple ports; or
multiple beams; or
each beam in the multiple beams.

61. An apparatus for reporting information, comprising:
a sending module, configured to send first channel state information to a network device;
wherein the sending module is configured to send second channel state information to the network device, wherein the second channel state information comprises a difference with respect to the first channel state information.

62. An apparatus for reporting information, comprising:
a receiving module, configured to receive first channel state information sent by a terminal;
wherein the receiving module is configured to receive second channel state information sent by the terminal, wherein the second channel state information comprises a difference with respect to the first channel state information.

63. A terminal, comprising:
a processor; and
a transceiver, connected with the processor;
wherein the processor is configured to load and execute executable instructions to implement the method for reporting information according to any one of claims 1 to 30.

64. A network device, comprising:
a processor; and
a transceiver, connected with the processor;
wherein the processor is configured to load and execute executable instructions to implement the method for reporting information according to any one of claims 31 to 60.

65. A computer readable storage medium having executable program codes stored thereon, wherein the executable program codes are loaded and executed by a processor, the processor is caused to implement the method for reporting information according to any one of claims 1 to 60.
